# EUROPEAN PATENT SPECIFICATION

(11) **EP 3 731 010 B1**
(45) Date of publication and mention of the grant of the patent: **27.09.2023**
(21) Application number: 18927229.7
(22) Date of filing: 07.12.2018
(51) Int. Cl.: G02F 1/153, G02F 1/161, G02F 1/13

(54) **VISIBILITY RANGE ADJUSTMENT COMPONENT AND DRIVING METHOD THEREFOR, VISIBILITY RANGE ADJUSTMENT APPARATUS, AND DISPLAY APPARATUS**
KOMPONENTE ZUR EINSTELLUNG DES SICHTBEREICHS UND ANSTEUERUNGSVERFAHREN DAFÜR, GERÄT ZUR EINSTELLUNG DES SICHTBEREICHS UND ANZEIGEGERÄT
COMPOSANT DE RÉGLAGE DE PLAGE DE VISIBILITÉ ET SON PROCÉDÉ DE COMMANDE, APPAREIL DE RÉGLAGE DE PLAGE DE VISIBILITÉ ET APPAREIL D'AFFICHAGE

(43) Date of publication of application: 28.10.2020
(73) Proprietor: BOE TECHNOLOGY GROUP CO., LTD., Beijing 100015 (CN); Beijing BOE Optoelectronics Technology Co., Ltd., Beijing 100176 (CN)
(72) Inventor: CHEN, Lei, Beijing 100176 (CN); ZHANG, Qi, Beijing 100176 (CN); WANG, Xuerong, Beijing 100176 (CN); WANG, Zhiqiang, Beijing 100176 (CN); MA, Xin, Beijing 100176 (CN); SUN, Chuan, Beijing 100176 (CN); WANG, Qiuli, Beijing 100176 (CN); RUI, Bochao, Beijing 100176 (CN); SHI, Lingyun, Beijing 100176 (CN); ZHANG, Hao, Beijing 100176 (CN)
(74) Representative: Brötz, Helmut
(86) International application number: PCT/CN2018/119763
(87) International publication number: WO 2020/113556

(56) References cited:
- CN-A- 102 375 263
- CN-A- 102 612 663
- CN-A- 104 808 413
- CN-A- 106 950 740
- CN-A- 108 604 034
- CN-A- 108 681 171
- JP-A- 2018 132 718
- KR-A- 20150 061 757
- US-A1- 2013 050 798
- US-A1- 2014 232 960
- US-A1- 2016 011 441

## Description

### TECHNICAL FIELD

Embodiments of the disclosure relate to a visual range adjustment component and a driving method thereof, a visual range adjustment device, and a display device.

### BACKGROUND

With the continuous development of the smart phone market, business functions of smart phone are continuously strengthened, and many users perform business activities on smart phone. At the same time, the problem of information stealing and peeking on smart phone has gradually attracted people's attentions.

At present, in order to solve the above-mentioned problem of information stealing and peeking on the smart phone, a visual range of a screen of the smart phone can be reduced by additionally providing an anti-peeking film on the screen, so that only the user exactly opposite to the screen of the smart phone can see the contents on the screen, while other people at two lateral sides of the user cannot see the contents on the screen, thus realizing the anti-peeking effect.
US20130050798 A1, on which the preamble of claim 1 is based, discloses a privacy filter and its preparation method and, more particularly a privacy filter and its preparation method in which the privacy filter comprises: a first transparent substrate; a second transparent substrate positioned a predetermined distance apart from and opposite to the first transparent substrate; an electrolyte filled between the first and second transparent substrates; and a second transparent conductive layer disposed between the electrolyte and the second transparent substrate. The first transparent substrate comprises: an uneven pattern having a wire grid and trenches formed on the first transparent substrate; a first transparent conductive layer formed on the wire grid and the trenches of the uneven pattern; and an electrochromic layer being formed on the first transparent conductive layer along the sidewall of the wire grid and containing an electrochromic material to transmit or absorb visible light depending on whether an electrical signal is applied or not. The privacy filter is disclosed to be able to effectively block the lateral transmission of light without a loss of the front transmittance in the private mode, achieve a fast switching between wide field mode and narrow field mode, and secure excellences in filter performance and driving stability.
US20160011441A1 discloses an electronically switchable privacy device suitable for use in display devices. The electronically switchable privacy device comprises a first transparent electrode layer, an electronically switchable layer disposed adjacent to the first transparent electrode layer, and a second transparent electrode layer disposed adjacent to the electronically switchable layer and opposite the first transparent electrode layer. The second transparent electrode layer comprises a transparent substrate layer having a plurality of microstructured ribs extending across a major surface of the transparent substrate layer such that the microstructured ribs form an alternating series of ribs and channels, each channel having channel walls defined by adjacent ribs. A plurality of transparent electrode members comprising a transparent electrode material are disposed on at least one channel wall in a corresponding plurality of the channels; and a bus member provides electrical connectivity across the plurality of transparent electrode members. A spacer element disposed in the electronically switchable layer keeps the first transparent electrode layer spaced apart from the second transparent electrode layer. A portion of the electronically switchable layer at least partially fills the plurality of channels and makes electrical contact with the plurality of transparent electrode members. The electronically switchable layer comprises an electronically switchable material capable of modulation between high and low light absorption states upon application of a direct current voltage across the first and second transparent electrode layers.
US20140232960A1 discloses electronically switchable privacy films suitable for use in display devices. The electronically switchable privacy film comprises a pair of mutually opposing transparent electrodes; an optically transparent microstructured layer disposed between the transparent electrodes, the microstructured layer comprising a plurality of microstructured ribs extending across a surface thereof such that the microstructured ribs form an alternating series of ribs and channels; and electronically switchable material disposed in the channels, the electronically switchable material being capable of modulation between high and low absorption states upon application of an electric field across the transparent electrodes.

### SUMMARY

The present invention provides a visual range adjustment component, which includes: a first substrate; a second substrate arranged opposite to the first substrate; an electrolyte layer located between the first substrate and the second substrate; and a plurality of electrochromic elements located between the first substrate and the second substrate, each of the plurality of electrochromic elements includes a first transparent electrode, two second transparent electrodes and an electrochromic layer; the first transparent electrode is located on a side of the first substrate facing the second substrate, and the second transparent electrode is located on a side of the second substrate facing the first substrate; the electrolyte layer is arranged to be in contact with the first transparent electrode, the second transparent electrode, and the electrochromic layer, respectively; the first transparent electrode and the two second transparent electrodes respectively are configured to, when connected to a driving component, drive the electrochromic layer to change color through the electrolyte layer to adjust, when the visual range adjustment component is located on the display side of a display panel, the visual range of the display panel;
each of the plurality of electrochromic elements further includes: a transparent support structure located between the first substrate and the second substrate to maintain a gap between the first substrate and the second substrate; the transparent support structure is arranged between the two second transparent electrodes, an orthographic projection of the transparent support structure on the first substrate is located within an orthographic projection of the first transparent electrode on the first substrate, and the electrochromic layer is located between the transparent support structure and the electrolyte layer; the transparent support structure has an elongated shape extending in a first direction parallel to the first substrate or the second substrate, and a shape of a cross section of the transparent support structure perpendicular to the first direction includes a trapezoid; a bottom edge of the trapezoid is an edge of the trapezoid close to the first substrate, and a top edge of the trapezoid is an edge of the trapezoid away from the first substrate; a range of a base angle of the trapezoid at the bottom edge is 65 degrees-75 degrees.

For example, in the visual range adjustment component provided by an embodiment of the present disclosure, the electrochromic layer is located on a lateral surface of the transparent support structure being in contact with an electrolyte in the electrolyte layer, the first transparent electrode is connected with the electrochromic layer, and the second transparent electrode is spaced apart from the electrochromic layer.

For example, in the visual range adjustment component provided by an embodiment of the present disclosure, two adjacent ones of the plurality of electrochromic elements share one second transparent electrode.

For example, in the visual range adjustment component provided by an embodiment of the present disclosure, the electrochromic layer includes a metal oxide.

For example, in the visual range adjustment component provided by an embodiment of the present disclosure, a material of the electrochromic layer includes at least one selected from the group consisting of tungsten trioxide, tantalum pentoxide, cuprous oxide, nickel oxide, and nickel hydroxide.

For example, in the visual range adjustment component provided by an embodiment of the present disclosure, the electrochromic layer is arranged obliquely with respect to the first substrate.

For example, in the visual range adjustment component provided by an embodiment of the present disclosure, the electrochromic layer is located on a lateral surface of the transparent support structure parallel to the first direction.

For example, in the visual range adjustment component provided by an embodiment of the present disclosure, the plurality of electrochromic elements are arranged at intervals along a second direction perpendicular to the first direction.

For example, in the visual range adjustment component provided by an embodiment of the present disclosure, a range of a thickness of the electrolyte layer in a direction perpendicular to the first substrate or the second substrate is 100 µm-200 µm.

At least one embodiment of the present disclosure further provides a visual range adjustment device, including: any one of the abovementioned visual range adjustment components; and the driving component, electrically connected with the first transparent electrode and the second transparent electrode, respectively, and configured to drive the electrochromic layer to switch between a transparent state and an opaque state.

At least one embodiment of the present disclosure further provides a display device, including: any one of the abovementioned visual range adjustment components; and a display panel, having a display side, the visual range adjustment component is located on the display side of the display panel.

At least one embodiment of the present disclosure further provides a driving method of a visual range adjustment component, wherein the visual range adjustment component is any one of the abovementioned visual range adjustment components, and the driving method including: applying a first voltage between the first transparent electrode and the second transparent electrode such that the electrochromic layer is in a transparent state; removing the first voltage, and maintaining the electrochromic layer in the transparent state; applying a second voltage between the first transparent electrode and the second transparent electrode such that the electrochromic layer is in an opaque state; and removing the second voltage, and maintaining the electrochromic layer in the opaque state.

For example, in the driving method of the visual range adjustment device provided by an embodiment of the present disclosure, a light transmittance in the transparent state is in the range of 85%-90%; and/or, a light transmittance in the opaque state is in the range of 5%-10%.

### BRIEF DESCRIPTION OF THE DRAWINGS

In order to clearly explain the technical solution in the embodiments of the present disclosure, the drawings of the embodiments will be briefly introduced in the following. Apparently, the described drawings in the following are only some embodiments of the present disclosure without any limitation to the present disclosure.
Fig. 1 is a schematic diagram of a visual range adjustment component according to an embodiment of the present disclosure;
Fig. 2 is a schematic diagram illustrating a transmittance of an electrochromic material according to an embodiment of the present disclosure;
Fig. 3A is a schematic cross-sectional view of a visual range adjustment component taken by a plane perpendicular to a first direction illustrated in Fig. 1, according to an embodiment of the present disclosure;
Fig. 3B is a schematic cross-sectional view of another visual range adjustment component taken by a plane perpendicular to the first direction illustrated in Fig. 1, according to an embodiment of the present disclosure;
Fig. 4 is an operation diagram of the visual range adjustment component illustrated in Fig. 3A;
Fig. 5 is another operation diagram of the visual range adjustment component illustrated in Fig. 3A;
Fig. 6 is a schematic diagram of a visual range adjustment device according to an embodiment of the present disclosure;
Fig. 7 is a schematic diagram of a display device according to an embodiment of the present disclosure;
Fig. 8 is a schematic diagram illustrating a distribution of brightness with respect to angle under a wide viewing angle of the display device illustrated in Fig. 7;
Fig. 9 is a schematic diagram illustrating a distribution of brightness with respect to angle under a narrow viewing angle of the display device illustrated in Fig. 7; and
Fig. 10 is a flowchart of a driving method of a visual range adjustment component according to an embodiment of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. The terms "comprise", "comprising", "include", "including", etc., are intended to specify that the elements or the objects stated before these terms encompass the elements or the objects and equivalents thereof listed after these terms, but do not preclude the other elements or objects. The phrases "connect", "connected" and the like are not limited to a physical or mechanical connection, but also include an electrical connection, either directly or indirectly.

Although an anti-peeking effect can be achieved by additionally providing an anti-peeking film on a screen of smart phone to reduce a visual range of the screen, on the one hand, this method will reduce the visual range, on the other hand, this method will also reduce the display brightness, thus reducing the user experience when performing other activities on the smart phone, such as watching movies and playing games. Therefore, in order to take both of anti-peeking effect and good user experience into account, when the user performs privacy-related activities on the smart phone, such as business activities or payment activities, the visual range of the smart phone can be reduced to achieve the anti-peeking effect; when the user performs other activities on the smart phone, the visual range of the smart phone can be restored to a larger state.

Therefore, the embodiments of the present disclosure provide a visual range adjustment component, a driving method thereof, a visual range adjustment device and a display device. The visual range adjustment component includes a first substrate; a second substrate arranged opposite to the first substrate; an electrolyte layer located between the first substrate and the second substrate; and a plurality of electrochromic elements located between the first substrate and the second substrate, each of the plurality of electrochromic elements includes a first transparent electrode, two second transparent electrodes and an electrochromic layer; the first transparent electrode is located on a side of the first substrate facing the second substrate, and the second transparent electrode is located on a side of the second substrate facing the first substrate; the electrolyte layer is arranged to be in contact with the first transparent electrode, the second transparent electrode, and the electrochromic layer, respectively; the first transparent electrode and the two second transparent electrodes respectively drive the electrochromic layer to change color through the electrolyte layer to adjust a visual range. Upon a driving voltage or current being applied between the first transparent electrode and the second transparent electrode, the electrochromic material in the electrochromic layer being in contact with the electrolyte in the electrolyte layer can undergo a reversible and stable color change, so that the electrochromic layer disposed on the transparent support structures arranged at intervals can be switched between a transparent state and an opaque state, and the visual range can be adjusted.

Hereinafter, the visual range adjustment component and the driving method thereof, the visual range adjustment device, and the display device provided by the embodiments of the present disclosure will be described below with reference to the accompanying drawings.

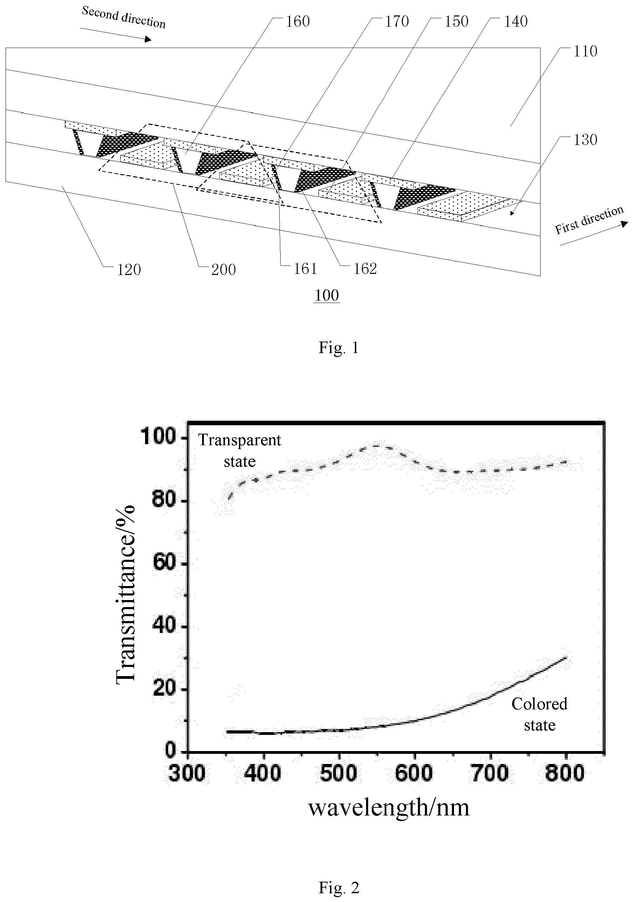

At least one embodiment of the present disclosure provides a visual range adjustment component. Fig. 1 illustrates a visual range adjustment component according to an embodiment of the present disclosure. As illustrated by Fig. 1, the visual range adjustment component 100 includes a first substrate 110; a second substrate 120 arranged opposite to the first substrate 110; an electrolyte layer 130 located between the first substrate 110 and the second substrate 120; and a plurality of electrochromic elements 200 located between the first substrate 110 and the second substrate 120. Each of the plurality of electrochromic elements 200 includes a first transparent electrode 140, two second transparent electrodes 150 and an electrochromic layer 170; the first transparent electrode 140 is located on a side of the first substrate 110 facing the second substrate 120, and the second transparent electrode 150 is located on a side of the second substrate 120 facing the first substrate 110. The electrolyte layer 130 is arranged to be in contact with the first transparent electrode 140, the second transparent electrode 150 and the electrochromic layer 170, respectively. The first transparent electrode 140 and the two second transparent electrodes 150 respectively drive the electrochromic layer 170 to change color through the electrolyte layer 130 to adjust the visual range.

In the visual range adjustment component provided by the embodiment of the disclosure, upon a driving voltage or current being applied between the first transparent electrode and the second transparent electrode, the electrolyte layer can serve as an ion storage and exchange layer, the second transparent electrode can provide ions and the electrochromic film layer electrically connected with the first transparent electrode can receive ions; or, the electrochromic film layer electrically connected with the first transparent electrode can provide ions and the second transparent electrode receives ions. In this way, the electrochromic material in the electrochromic layer being in contact with the electrolyte in the electrolyte layer can undergo a reversible and stable change in valence state, resulting in a reversible and stable color change, so that the electrochromic layer can be switched between a transparent state and an opaque state. Upon the electrochromic layer being in a transparent state, the electrochromic layer does not block or absorb light emitted from the display panel, and the visual range of the display device including the visual range adjustment component and a display panel is relatively large. Upon the electrochromic layer being in an opaque state, the electrochromic layer blocks and absorbs light emitted from the display panel, and limits a part of the visual range, thereby narrowing the visual range of the display device including the visual range adjustment component and the display panel. Therefore, the visual range adjustment component can adjust the visual range. It should be noted that the visual range in the embodiment of the present disclosure refers to a range of visual angle, and the visual angle refers to an angle at which the user can observe all contents on the display panel from different directions. In addition, the visual angle can be an angle based on the vertical normal of the display panel (i.e. a vertical imaginary line in the middle of the display panel), from which all contents on the display panel can still be observed at a certain angle to the left or right of the vertical normal.

For instance, in some examples, as illustrated by Fig. 1, the electrochromic element 200 further includes a transparent support structure 160 located between the first substrate 110 and the second substrate 120 to maintain a gap between the first substrate 110 and the second substrate 120. The transparent support structure 160 is disposed between the two second transparent electrodes 150, an orthographic projection of the transparent support structure 160 on the first substrate 110 is located within an orthographic projection of the first transparent electrode 140 on the first substrate 110, and the electrochromic layer 170 is located between the transparent support structure 160 and the electrolyte layer 130.

For instance, in some examples, as illustrated by Fig. 1, the electrochromic layer 170 is located on a lateral surface of the transparent support structure 160 being in contact with the electrolyte in the electrolyte layer 130, such as a lateral surface 161 and a lateral surface 162. The first transparent electrode 140 is connected with the electrochromic layer 170, and the second transparent electrode 150 is spaced apart from the electrochromic layer 170, that is, the second transparent electrode 150 is not directly connected with the electrochromic layer 170.

For instance, in some examples, as illustrated by Fig. 1, adjacent ones of the plurality of electrochromic elements 200 share one second transparent electrode 150. For example, in some examples, as illustrated by Fig. 1, the electrochromic layer 170 is on a lateral surface of the transparent support structure 160 parallel to the first direction, such as the lateral surface 161 and the lateral surface 162. That is, the lateral surfaces 161 and 162 are surfaces parallel to the first direction.

For instance, in some examples, the electrochromic layer may include a metal oxide. Because, upon the color of the metal oxide electrochromic material being changed, the current color or light transmittance can be maintained without the need of applying a voltage or current between the first transparent electrode and the second transparent electrode all the time, thereby greatly reducing a power consumption.

For instance, in some examples, the electrochromic layer may include at least one selected from the group consisting of tungsten trioxide, tantalum pentoxide, cuprous oxide material, nickel oxide, and nickel hydroxide.

For instance, in some examples, as illustrated by Fig. 1, a plurality of transparent support structures 160 spaced apart from each other are disposed at intervals in a second direction perpendicular to the first direction. It should be noted that the first direction may be a column direction of the display panel and the second direction may be a row direction of the display device.

For example, the material of the first substrate and the second substrate includes a transparent material, such as glass, quartz, and plastic.

For instance, in some examples, the first substrate and the second substrate include a flexible material, i.e., the first substrate and the second substrate are flexible substrates, so that the visual range adjustment component provided in the present embodiment can be applied to a flexible display panel.

For instance, in some examples, the electrolyte layer may be a lithium perchlorate solution or a lithium perchlorate gel. Of course, embodiments of the present disclosure include but are not limited thereto, and the electrolyte layer may also include other materials.

For instance, in some examples, the electrochromic layer 170 may be coated on the lateral surface of the transparent support structure 160 being in contact with the electrolyte in the electrolyte layer 130, thereby facilitating the formation of a dense and thin electrochromic film.

Fig. 2 is a schematic diagram illustrating a transmittance of an electrochromic material according to an embodiment of the present disclosure. As illustrated by Fig. 2, upon different electrical signals being applied to the electrochromic material, the transmittance of the electrochromic material shows different states. Fig. 2 illustrates the nickel metal oxide electrochromic material as an example. Upon the nickel metal oxide electrochromic material being driven by a positive voltage of 0.8 V, that is, a voltage difference between the first transparent electrode and the second transparent electrode is +0.8 V, an average, white light transmittance of the nickel metal oxide electrochromic material ranges from 85% to 90%, and the entire nickel metal oxide electrochromic material is in a transparent state. Upon the nickel metal oxide electrochromic material being driven by a negative voltage of -0.5 V, that is, the voltage difference between the first transparent electrode and the second transparent electrode is -0.5 V, the average, white light transmittance of the nickel metal oxide electrochromic material ranges from 5% to 10%, and the entire nickel metal oxide electrochromic material is in a colored state, that is, an opaque state or an absorption state.

For instance, in some examples, as illustrated by Fig. 1, the electrochromic layer 170 is disposed obliquely with respect to the first substrate 110, so as to have a relatively large light shielding range upon the distance between the first substrate 110 and the second substrate 120 being constant, or to reduce a distance between the first substrate 110 and the second substrate 120 upon the light shielding range being constant.

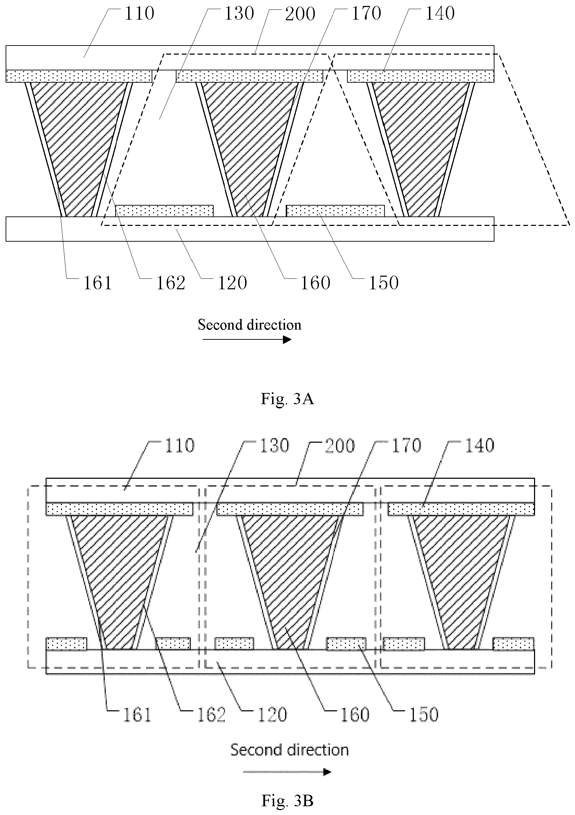

According to the present invention, as illustrated by Fig. 1, the transparent support structure 160 has an elongated shape extending in a first direction parallel to the first substrate 110 or the second substrate 120. Fig. 3A is a schematic cross-sectional view of a visual range adjustment component according to an embodiment of the present disclosure, taken by a plane perpendicular to the first direction illustrated in Fig. 1. Fig. 3B is a schematic cross-sectional view of another visual range adjustment component according to an embodiment of the present disclosure, taken by a plane perpendicular to the first direction illustrated in Fig. 1. As illustrated by Figs. 3A and 3B, a cross section of the transparent support structure 160 perpendicular to the first direction includes a trapezoidal shape. Thus, the electrochromic layer 170 located on the lateral surface of the transparent support structure 160 being in contact with the electrolyte in the electrolyte layer 130 may have an angle with respect to the first substrate 110. In this case, the electrochromic layer 170 can reduce the distance between the first substrate 110 and the second substrate 120, so as to reduce the thickness of the visual range adjustment component under the precondition that the minimum visual range of the visual range adjustment component (for example, the minimum visual range can be based on the vertical normal of the display panel and be offset by ± 20 degrees in the second direction) is unchanged.

For instance, in some examples, the electrolyte layer 13 0 has a thickness range of 100 µm-200 µm in a direction perpendicular to the first substrate 110 or the second substrate 120. For example, the thickness of the electrolyte layer 130 is 160 µm.

According to the present invention, a base angle of the trapezoid is in the range of 65 degrees-75 degrees. For another example, the base angle of the trapezoid is in the range of 68 degrees-70 degrees. In this case, the visual range adjustment component has a relatively small thickness on the premise that the visual range reaches a target (for example, the minimum visual range can be based on the vertical normal of the display panel and be offset by ± 20 degrees in the second direction).

As illustrated by Figs. 3A and 3B, the bottom edge of the trapezoid is an edge of the trapezoid close to the first substrate 110, and the top edge of the trapezoid is an edge of the trapezoid away from the first substrate 110. That is, the cross section of the transparent support structure 160 perpendicular to the first direction has an inverted-trapezoid shape. In the case where the display panel is disposed on a side of the second substrate 120 away from the first substrate 110, the visual range can be better narrowed when the electrochromic layer 170 is in an opaque state.

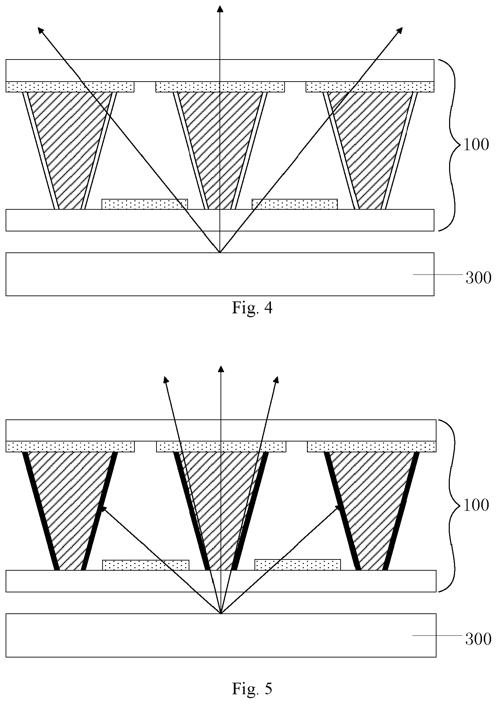

For instance, in some examples, as illustrated by Fig. 3A, adjacent ones of the plurality of electrochromic elements 200 share one second transparent electrode 150. Of course, the embodiments of the present disclosure include but are not limited thereto, and adjacent ones of the plurality of electrochromic elements 200 may not share one second transparent electrode 150. Fig. 4 is an operation diagram of the visual range adjustment component illustrated in Fig. 3A; Fig. 5 is another operation diagram of the visual range adjustment component illustrated in Fig. 3A. As illustrated by Figs. 4 and 5, the visual range adjustment component 100 may be disposed on a display side of a display panel 300 (e.g., a liquid crystal display panel or an organic light emitting diode display panel), thereby realizing adjustment of the visual range of a display device including the visual range adjustment component 100 and the display panel 300.

For example, as illustrated by Fig. 4, upon the electrochromic layer 170 being in a transparent state, for example, the average, white light transmittance of the electrochromic layer 170 ranges from 85% to 90%, the electrochromic layer 170 does not block or absorb the light emitted from the display panel 300, and the light emitted from the display panel 300 basically does not change after passing through the visual range adjustment component 100. In this case, the visual range of the display device including the visual range adjustment component 100 and the display panel 300 is large. Moreover, the brightness of the display device including the visual range adjustment component 100 and the display panel 300 decreases less (e.g., 10%-15%), which can ensure a better user experience.

For example, as illustrated by Fig. 5, upon the electrochromic layer 170 being in an opaque state, for example, the average, white light transmittance of the electrochromic layer 170 ranges from 5% to 10%, and the electrochromic layer 170 shields the light emitted from the display panel 300. As illustrated by Fig. 5, the light emitted from the display panel 300 is divided into two portions, in which the light with large viewing angle is absorbed by the opaque electrochromic layer 170, the light with small viewing angle is not blocked or absorbed by the electrochromic layer and can be normally transmitted, thereby narrowing the visual range of the display device including the visual range adjustment component and the display panel.

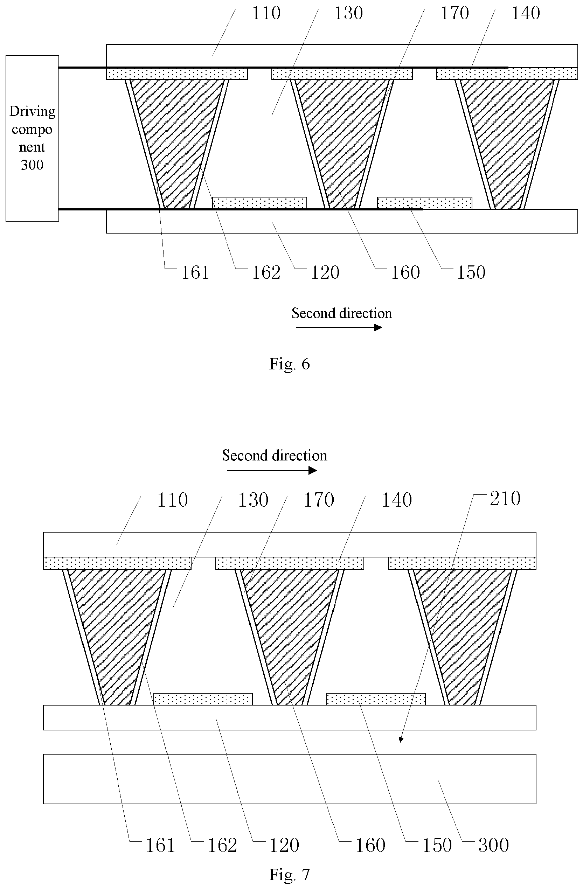

An embodiment of the present disclosure also provides a visual range adjustment device. Fig. 6 is a schematic diagram of a visual range adjustment device according to an embodiment of the present disclosure. As illustrated by Fig. 6, the visual range adjustment device 400 includes the visual range adjustment component 100 provided in the above embodiments and a driving component 300 configured to drive the electrochromic layer to switch between a transparent state and an opaque state. The driving component 300 is electrically connected to the first transparent electrode 140 and the second transparent electrode 150, respectively, so as to apply a voltage or current to the first transparent electrode 140 and the second transparent electrode 150 to adjust the visual range. It should be noted that the driving component 300 can be integrated in a driving circuit of the display panel. In this case, the visual range adjustment component 100 needs to be electrically connected with the driving circuit of the display panel.

An embodiment of the present disclosure also provides a display device. Fig. 7 is a schematic diagram of a display device according to an embodiment of the present disclosure. As illustrated by Fig. 7, the display device 500 includes the visual range adjustment component 100 provided in the above embodiments and the display panel 300. The display panel 300 has a display side 210, and the visual range adjustment component 100 is located on the display side 210 of the display panel 300 so as to adjust the visual range of the display device 500.

In the display device provided by the embodiment of the present disclosure, the electrochromic material in the electrochromic layer of the visual range adjustment component can undergo a reversible and stable change in valence state, resulting in a reversible and stable color change, so that the electrochromic layer disposed on the transparent support structures arranged at intervals can be switched between a transparent state and opaque state. Upon the electrochromic layer being in a transparent state, the electrochromic layer does not block or absorb light emitted from the display panel, and the visual range of the display device including the visual range adjustment component and a display panel is relatively large. Upon the electrochromic layer being in an opaque state, the electrochromic layer blocks and absorbs light emitted from the display panel, and limits a part of the visual range, thereby narrowing the visual range of the display device including the visual range adjustment component and the display panel. Therefore, the visual range of the display device can be adjusted.

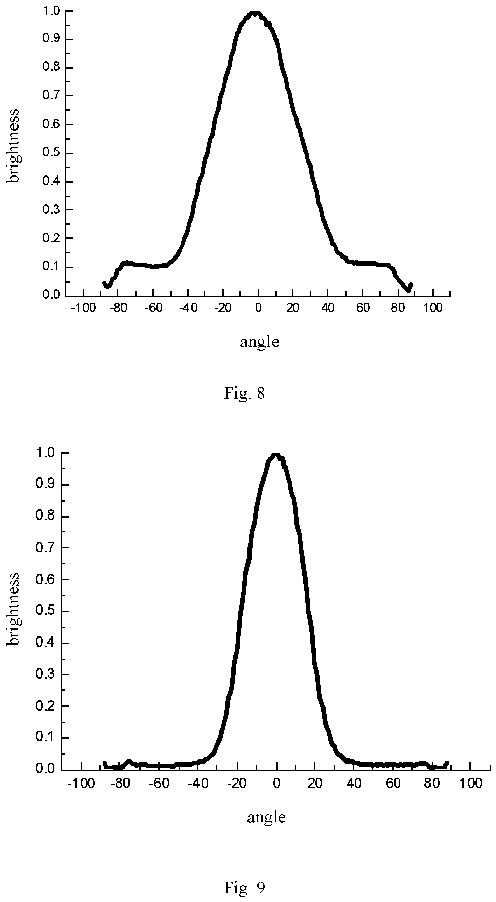

Fig. 8 is a schematic diagram illustrating a distribution of brightness with respect to angle under a wide viewing angle of the display device illustrated in Fig. 7; Fig. 9 is a schematic diagram illustrating a distribution of brightness with respect to angle under a narrow viewing angle of the display device illustrated in Fig. 7. As illustrated by Figs. 8 and 9, the visual range of the display device is significantly reduced.

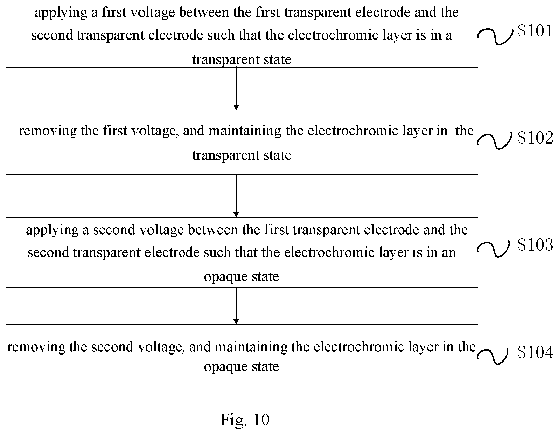

An embodiment of the present disclosure also provides a driving method of the visual range adjustment component. Fig. 10 is a flowchart of a driving method of a visual range adjustment component according to an embodiment of the present disclosure. As illustrated by Fig. 10, the driving method includes steps S101 - S104.

Step S101: applying a first voltage between the first transparent electrode and the second transparent electrode such that the electrochromic layer is in a transparent state.

For example, in the case where the material of the electrochromic layer is nickel metal oxide, the first voltage may be a positive voltage of 0.8 V, i.e., a voltage difference between the first transparent electrode and the second transparent electrode is +0.8 V.

Step S102: removing the first voltage, and maintaining the electrochromic layer in the transparent state.

Step S103: applying a second voltage between the first transparent electrode and the second transparent electrode such that the electrochromic layer is in an opaque state.

For example, in the case where the material of the electrochromic layer is nickel metal oxide, the second voltage may be a negative voltage of 0.5 V, that is, the voltage difference between the first transparent electrode and the second transparent electrode is -0.5 V.

Step S104: removing the second voltage, and maintaining the electrochromic layer in the opaque state.

The driving method of the visual range adjustment component provided by the present embodiment not only can adjust the visual range but also can maintain the current color or light transmittance without the need of applying the voltage or current between the first transparent electrode and the second transparent electrode all the time because the voltage or current is only required to be applied when changing the state of the electrochromic layer, thus greatly reducing the power consumption.

For instance, in some examples, the light transmittance in the transparent state ranges from 85% to 90%.

For instance, in some examples, the light transmittance in the opaque state ranges from 5% to 10%

The following statements should be noted:
(1) The accompanying drawings involve only the structure(s) in connection with the embodiment(s) of the present disclosure, and other structure(s) can be referred to common design(s).
(2) In case of no conflict, features in one embodiment or in different embodiments can be combined.

The foregoing is only specific embodiments of the present disclosure, but the protection scope of the present disclosure is not limited thereto. Therefore, the protection scope of the present disclosure should be based on protection scope of the claims.

## Claims

1. A visual range adjustment component (100), comprising:
a first substrate (110);
a second substrate (120) arranged opposite to the first substrate (110);
an electrolyte layer (130) located between the first substrate (110) and the second substrate (120); and
a plurality of electrochromic elements (200) located between the first substrate (110) and the second substrate (120),
wherein each of the plurality of electrochromic elements (200) comprises a first transparent electrode (140), two second transparent electrodes (150), and an electrochromic layer (170); the first transparent electrode (140) is located on a side of the first substrate (110) facing the second substrate (120), and the second transparent electrode (150) is located on a side of the second substrate (120) facing the first substrate (110),
the electrolyte layer (130) is arranged to be in contact with the first transparent electrode (140), the second transparent electrode (150), and the electrochromic layer (170), respectively, and
the first transparent electrode (140) and the two second transparent electrodes (150) respectively are configured to, when connected to a driving component (300), drive the electrochromic layer (170) to change color through the electrolyte layer (130) to adjust, when the visual range adjustment component is located on the display side of a display panel, the visual range of the display panel,
wherein each of the plurality of electrochromic elements (200) further comprises:
a transparent support structure (160), located between the first substrate (110) and the second substrate (120),
wherein the transparent support structure (160) is located between the two second transparent electrodes (150), an orthographic projection of the transparent support structure (160) on the first substrate (110) is located within an orthographic projection of the first transparent electrode (140) on the first substrate (110), and the electrochromic layer (170) is located between the transparent support structure (160) and the electrolyte layer (130),
wherein the transparent support structure (160) has an elongated shape extending in a first direction parallel to the first substrate (110) or the second substrate (120), and a shape of a cross section of the transparent support structure (160) perpendicular to the first direction comprises a trapezoid,
a bottom edge of the trapezoid is an edge of the trapezoid close to the first substrate (110), and a top edge of the trapezoid is an edge of the trapezoid away from the first substrate (110) **characterised in that** the transparent support structure is arranged to maintain a gap between the first substrate and the second substrate and
a range of a base angle of the trapezoid at the bottom edge is 65 degrees-75 degrees.

2. The visual range adjustment component (100) according to claim 1, wherein the electrochromic layer (170) is located on a lateral surface of the transparent support structure (160) being in contact with an electrolyte in the electrolyte layer (130), the first transparent electrode (140) is connected with the electrochromic layer (170), and the second transparent electrode (150) is spaced apart from the electrochromic layer (170).

3. The visual range adjustment component (100) according to claim 1, wherein two adjacent ones of the plurality of electrochromic elements (200) share one second transparent electrode (150).

4. The visual range adjustment component (100) according to any one of claims 1-3, wherein the electrochromic layer (170) comprises a metal oxide.

5. The visual range adjustment component (100) according to claim 4, wherein a material of the electrochromic layer (170) comprises at least one selected from the group consisting of tungsten trioxide, tantalum pentoxide, cuprous oxide, nickel oxide, and nickel hydroxide.

6. The visual range adjustment component (100) according to any one of claims 1-5, wherein the electrochromic layer (170) is arranged obliquely with respect to the first substrate (110).

7. The visual range adjustment component (100) according to claim 1, wherein the electrochromic layer (170) is located on a lateral surface of the transparent support structure (160) parallel to the first direction (110).

8. The visual range adjustment component (100) according to claim 1, wherein the plurality of electrochromic elements (200) are arranged at intervals along a second direction perpendicular to the first direction.

9. The visual range adjustment component (100) according to any one of claims 1-8, wherein a range of a thickness of the electrolyte layer (130) in a direction perpendicular to the first substrate (110) or the second substrate (120) is 100 µm-200 µm.

10. A visual range adjustment device (400), comprising:
the visual range adjustment component (100) according to any one of claims 1-9; and
the driving component (300), electrically connected with the first transparent electrode (140) and the second transparent electrode (150), respectively, and configured to drive the electrochromic layer (170) to switch between a transparent state and an opaque state.

11. A display device (500), comprising:
the visual range adjustment component (100) according to any one of claims 1-9; and
a display panel (300), having a display side (210),
wherein the visual range adjustment component (100) is located on the display side (210) of the display panel (300).

12. A driving method of a visual range adjustment component (100), wherein the visual range adjustment component (100) is the visual range adjustment component (100) according to any one of claims 1-9, the driving method comprising:
applying a first voltage between the first transparent electrode (140) and the second transparent electrode (150) such that the electrochromic layer (170) is in a transparent state;
removing the first voltage, and maintaining the electrochromic layer (170) in the transparent state;
applying a second voltage between the first transparent electrode (140) and the second transparent electrode (150) such that the electrochromic layer (170) is in an opaque state; and
removing the second voltage, and maintaining the electrochromic layer (170) in the opaque state.

13. The driving method of the visual range adjustment component (100) according to claim 12, wherein a light transmittance in the transparent state is in the range of 85%-90%,
and/or
a light transmittance in the opaque state is in the range of 5%-10%.

## Patentansprüche

1. Komponente zur Einstellung des Sichtbereichs (100), die Folgendes umfasst:
ein erstes Substrat (110);
ein zweites Substrat (120), das gegenüber dem ersten Substrat (110) angeordnet ist;
eine Elektrolytschicht (130), die zwischen dem ersten Substrat (110) und dem zweiten Substrat (120) lokalisiert ist; und
eine Vielzahl von elektrochromen Elementen (200), die zwischen dem ersten Substrat (110) und dem zweiten Substrat (120) lokalisiert sind,
wobei jedes von der Vielzahl der elektrochromen Elemente (200) eine erste transparente Elektrode (140), zwei zweite transparente Elektroden (150) und eine elektrochrome Schicht (170) umfasst; wobei die erste transparente Elektrode (140) auf einer Seite des ersten Substrats (110) lokalisiert ist, die dem zweiten Substrat (120) zugewandt ist, und wobei die zweite transparente Elektrode (150) auf einer Seite des zweiten Substrats (120) angeordnet ist, die dem ersten Substrat (110) zugewandt ist,
wobei die Elektrolytschicht (130) so angeordnet ist, dass sie jeweils in Kontakt mit der ersten transparenten Elektrode (140), der zweiten transparenten Elektrode (150) und der elektrochromen Schicht (170) steht, und
wobei die erste transparente Elektrode (140) und die zwei zweiten transparenten Elektroden (150) jeweils so konfiguriert sind, dass sie, wenn an eine Ansteuerkomponente (300) angeschlossen, die elektrochrome Schicht (170) durch die Elektrolytschicht (130) ansteuern, um Färbung zu ändern, um, wenn die Komponente zur Einstellung des Sichtbereichs auf der Anzeigeseite der Anzeigetafel lokalisiert ist, den Sichtbereich der Anzeigetafel einzustellen,
wobei jedes der von der Vielzahl der elektrochromen Elemente (200) ferner umfasst:
eine transparente Trägerstruktur (160), die zwischen dem ersten Substrat (110) und dem zweiten Substrat (120) lokalisiert ist,
wobei die transparente Trägerstruktur (160) zwischen den beiden zweiten transparenten Elektroden (150) lokalisiert ist, wobei eine senkrechte Projektion der transparenten Trägerstruktur (160) auf das erste Substrat (110) innerhalb einer senkrechten Projektion der ersten transparenten Elektrode (140) auf das erste Substrat (110) lokalisiert ist, und wobei die elektrochrome Schicht (170) zwischen der transparenten Trägerstruktur (160) und der Elektrolytschicht (130) lokalisiert ist,
wobei die transparente Trägerstruktur (160) eine längliche Form aufweist, die sich in einer ersten Richtung parallel zu dem ersten Substrat (110) oder dem zweiten Substrat (120) erstreckt, und wobei eine Form eines Querschnitts der transparenten Trägerstruktur (160) senkrecht zu der ersten Richtung ein Trapez umfasst,
wobei ein unterer Rand des Trapezes ein Rand des Trapezes in der Nähe des ersten Substrats (110) ist, und eine obere Kante des Trapezes eine Kante des Trapezes entfernt von dem ersten Substrat (110) ist, **dadurch gekennzeichnet, dass** die transparente Trägerstruktur so angeordnet ist, dass sie einen Spalt zwischen dem ersten Substrat und dem zweiten Substrat aufrechterhält und
ein Bereich eines Basiswinkels des Trapezes an dem unteren Rand 65°-75° beträgt.

2. Komponente (100) zur Einstellung des Sichtbereichs gemäß Anspruch 1, wobei die elektrochrome Schicht (170) an einer Seitenfläche der transparenten Trägerstruktur (160) lokalisiert ist, die mit einem Elektrolyten in der Elektrolytschicht (130) in Kontakt steht, wobei die erste transparente Elektrode (140) mit der elektrochromen Schicht (170) verbunden ist und die zweite transparente Elektrode (150) von der elektrochromen Schicht (170) beabstandet ist.

3. Komponente (100) zur Einstellung des Sichtbereichs gemäß Anspruch 1, wobei sich zwei benachbarte Elemente von der Vielzahl von elektrochromen Elementen (200) eine zweite transparente Elektrode (150) teilen.

4. Komponente (100) zur Einstellung des Sichtbereichs gemäß einem der Ansprüche 1 bis 3, wobei die elektrochrome Schicht (170) ein Metalloxid umfasst.

5. Komponente (100) zur Einstellung des Sichtbereichs gemäß Anspruch 4, wobei ein Material der elektrochromen Schicht (170) mindestens eines umfasst, das aus der Gruppe ausgewählt ist, die aus Wolframtrioxid, Tantalpentoxid, Kupferoxid, Nickeloxid und Nickelhydroxid besteht.

6. Komponente (100) zur Einstellung des Sichtbereichs gemäß einem der Ansprüche 1 bis 5, wobei die elektrochrome Schicht (170) schräg zum ersten Substrat (110) angeordnet ist.

7. Komponente (100) zur Einstellung des Sichtbereichs gemäß Anspruch 1, wobei die elektrochrome Schicht (170) an einer Seitenfläche der transparenten Trägerstruktur (160) parallel zur ersten Richtung (110) lokalisiert ist.

8. Komponente (100) zur Einstellung des Sichtbereichs gemäß Anspruch 1, wobei die mehreren elektrochromen Elemente (200) in Abständen entlang einer zweiten Richtung angeordnet sind, die senkrecht zur ersten Richtung verläuft.

9. Komponente (100) zur Einstellung des Sichtbereichs gemäß einem der Ansprüche 1 bis 8, wobei ein Bereich einer Dicke der Elektrolytschicht (130) in einer Richtung senkrecht zu dem ersten Substrat (110) oder dem zweiten Substrat (120) 100 µm bis 200 µm beträgt.

10. Vorrichtung (400) zur Einstellung des Sichtbereichs, die Folgendes umfasst:
die Komponente zur Einstellung des Sichtbereichs (100) gemäß einem der Ansprüche 1 bis 9; und
die Ansteuerkomponente (300), elektrisch mit der ersten transparenten Elektrode (140) bzw. der zweiten transparenten Elektrode (150) verbunden, und so konfiguriert, dass sie die elektrochrome Schicht (170) ansteuert, um zwischen einem transparenten Zustand und einem undurchsichtigen Zustand zu wechseln.

11. Anzeigevorrichtung (500), umfassend:
die Komponente zur Einstellung des Sichtbereichs (100) gemäß einem der Ansprüche 1 bis 9; und
eine Anzeigetafel (300), aufweisend eine Anzeigeseite (210),
wobei die Komponente zur Einstellung des Sichtbereichs (100) auf der Anzeigeseite (210) des Anzeigefeldes (300) angeordnet ist.

12. Ansteuerungsverfahren für eine Komponente (100) zur Einstellung des Sichtbereichs, wobei die Komponente (100) zur Einstellung des Sichtbereichs die Komponente (100) zur Einstellung des Sichtbereichs gemäß einem der Ansprüche 1 bis 9 ist, wobei das Ansteuerungsverfahren umfasst:
Anlegen einer ersten Spannung zwischen der ersten transparenten Elektrode (140) und der zweiten transparenten Elektrode (150), so dass die elektrochrome Schicht (170) in einem transparenten Zustand ist;
Entfernen der ersten Spannung und Halten der elektrochromen Schicht (170) in dem transparenten Zustand;
Anlegen einer zweiten Spannung zwischen der ersten transparenten Elektrode (140) und der zweiten transparenten Elektrode (150), so dass die elektrochrome Schicht (170) in einem undurchsichtigen Zustand ist; und
Entfernen der zweiten Spannung und Halten der elektrochromen Schicht (170) in dem undurchsichtigen Zustand.

13. Ansteuerungsverfahren für die Komponente (100) zur Einstellung des Sichtbereichs gemäß Anspruch 12, wobei die Lichtdurchlässigkeit in dem transparenten Zustand im Bereich von 85 % bis 90 % liegt,
und/oder
wobei eine Lichtdurchlässigkeit in dem undurchsichtigen Zustand im Bereich von 5-10 % liegt.

## Revendications

1. Composant de réglage de plage visuelle (100), comprenant :
un premier substrat (110) ;
un deuxième substrat (120) agencé à l'opposé du premier substrat (110) ;
une couche d'électrolyte (130) située entre le premier substrat (110) et le deuxième substrat (120) ; et
une pluralité d'éléments électrochromes (200) situés entre le premier substrat (110) et le deuxième substrat (120),
dans lequel chacun parmi la pluralité d'éléments électrochromes (200) comprend une première électrode transparente (140), deux deuxièmes électrodes transparentes (150) et une couche électrochrome (170) ; la première électrode transparente (140) est située sur un côté du premier substrat (110) faisant face au deuxième substrat (120), et la deuxième électrode transparente (150) est située sur un côté du deuxième substrat (120) faisant face au premier substrat (110),
la couche d'électrolyte (130) est agencée pour être en contact avec respectivement la première électrode transparente (140), la deuxième électrode transparente (150) et la couche électrochrome (170), et
la première électrode transparente (140) et les deux deuxièmes électrodes transparentes (150) sont respectivement configurées pour, lorsqu'elles sont reliées à un composant de commande (300), commander à la couche électrochrome (170) de changer de couleur à travers la couche d'électrolyte (130) pour régler, lorsque le composant de réglage de plage visuelle est situé sur le côté d'affichage d'un panneau d'affichage, la plage visuelle du panneau d'affichage,
dans lequel chacun parmi la pluralité d'éléments électrochromes (200) comprend en outre :
une structure de support transparente (160), située entre le premier substrat (110) et le deuxième substrat (120),
dans lequel la structure de support transparente (160) est située entre les deux deuxièmes électrodes transparentes (150), une projection orthographique de la structure de support transparente (160) sur le premier substrat (110) est située à l'intérieur d'une projection orthographique de la première électrode transparente (140) sur le premier substrat (110), et la couche électrochrome (170) est située entre la structure de support transparente (160) et la couche d'électrolyte (130),
dans lequel la structure de support transparente (160) présente une forme allongée s'étendant dans une première direction parallèle au premier substrat (110) ou au deuxième substrat (120), et une forme d'une coupe transversale de la structure de support transparente (160) perpendiculaire à la première direction comprend un trapézoïde,
un bord inférieur du trapézoïde est un bord du trapézoïde proche du premier substrat (110), et un bord supérieur du trapézoïde est un bord du trapézoïde éloigné du premier substrat (110),
**caractérisé en ce que** la structure de support transparente est agencée pour maintenir un écartement entre le premier substrat et le deuxième substrat et une plage d'un angle de base du trapézoïde au niveau du bord inférieur est de 65 degrés à 75 degrés.

2. Composant de réglage de plage visuelle (100) selon la revendication 1, dans lequel la couche électrochrome (170) est située sur une surface latérale de la structure de support transparente (160) qui est en contact avec un électrolyte dans la couche d'électrolyte (130), la première électrode transparente (140) est reliée à la couche électrochrome (170), et la deuxième électrode transparente (150) est espacée de la couche électrochrome (170).

3. Composant de réglage de plage visuelle (100) selon la revendication 1, dans lequel deux éléments adjacents parmi la pluralité d'éléments électrochromes (200) partagent une deuxième électrode transparente (150).

4. Composant de réglage de plage visuelle (100) selon l'une quelconque des revendications 1 à 3, dans lequel la couche électrochrome (170) comprend un oxyde de métal

5. Composant de réglage de plage visuelle (100) selon la revendication 4, dans lequel un matériau de la couche électrochrome (170) comprend au moins l'un sélectionné dans le groupe se composant de trioxyde de tungstène, pentoxyde de tantale, oxyde de cuivre, oxyde de nickel et hydroxyde de nickel.

6. Composant de réglage de plage visuelle (100) selon l'une quelconque des revendications 1 à 5, dans lequel la couche électrochrome (170) est agencée de manière oblique par rapport au premier substrat (110).

7. Composant de réglage de plage visuelle (100) selon la revendication 1, dans lequel la couche électrochrome (170) est située sur une surface latérale de la structure de support transparente (160) parallèle à la première direction (110).

8. Composant de réglage de plage visuelle (100) selon la revendication 1, dans lequel la pluralité d'éléments électrochromes (200) sont agencés à des intervalles le long d'une deuxième direction perpendiculaire à la première direction.

9. Composant de réglage de plage visuelle (100) selon l'une quelconque des revendications 1 à 8, dans lequel une plage d'une épaisseur de la couche d'électrolyte (130) dans une direction perpendiculaire au premier substrat (110) ou au deuxième substrat (120) est de 100 µm à 200 pm.

10. Dispositif de réglage de plage visuelle (400), comprenant :
le composant de réglage de plage visuelle (100) selon l'une quelconque des revendications 1 à 9 ; et
le composant de commande (300), relié électriquement à respectivement la première électrode transparente (140) et la deuxième électrode transparente (150), et configuré pour commander à la couche électrochrome (170) de commuter entre un état transparent et un état opaque.

11. Dispositif d'affichage (500), comprenant :
le composant de réglage de plage visuelle (100) selon l'une quelconque des revendications 1 à 9 ; et
un panneau d'affichage (300), comportant un côté d'affichage (210),
dans lequel le composant de réglage de plage visuelle (100) est situé sur le côté d'affichage (210) du panneau d'affichage (300).

12. Procédé de commande d'un composant de réglage de plage visuelle (100), dans lequel le composant de réglage de plage visuelle (100) est le composant de réglage de plage visuelle (100) selon l'une quelconque des revendications 1 à 9, le procédé de commande comprenant :
l'application d'une première tension entre la première électrode transparente (140) et la deuxième électrode transparente (150) de sorte que la couche électrochrome (170) soit dans un état transparent ;
la suppression de la première tension et le maintien de la couche électrochrome (170) dans l'état transparent ;
l'application d'une deuxième tension entre la première électrode transparente (140) et la deuxième électrode transparente (150) de sorte que la couche électrochrome (170) soit dans un état opaque ; et
la suppression de la deuxième tension et le maintien de la couche électrochrome (170) dans l'état opaque.

13. Procédé de commande du composant de réglage de plage visuelle (100) la revendication 12, dans lequel une transmittance de lumière dans l'état transparent est dans la plage de 85 % à 90 %, et/ou
une transmittance de lumière dans l'état opaque est dans la plage de 5 % à 10 %.
